# EUROPÄISCHE PATENTANMELDUNG

(11) **EP 1 547 752 A1**
(43) Veröffentlichungstag der Anmeldung: **29.06.2005**
(21) Anmeldenummer: 03029858.2
(22) Anmeldetag: 24.12.2003
(51) Int. Cl.: B29C 51/36, B29C 33/38

(54) **Vorrichtung zum Thermoformen**

(71) Anmelder: H. Hahn Modellbau GmbH, 36205 Sontra (DE); AirTools GmbH, 74376 Gemmrigheim (DE)
(72) Erfinder: Kuhs, Harald, 74376 Gemmrigheim (DE); Hahn, Hartmut, 34266 Niestetal (DE); Hose, Ralph, 37296 Ringgau-Datterode (DE)
(74) Vertreter: Weber, Thomas, Dr. Dipl.-Chem.

(57) **Zusammenfassung**

Die Erfindung betrifft eine Vorrichtung (1) zum Thermoformen, insbesondere von thermoplastischen Kunststoffen, ein Verfahren zum Thermoformen unter Verwendung der Vorrichtung (1), sowie Formteile, die durch dieses Verfahren erhältlich sind.

## Beschreibung

Die Erfindung betrifft eine Vorrichtung zum Thermoformen, insbesondere von thermoplastischen Kunststoffen, ein Verfahren zum Thermoformen unter Verwendung der Vorrichtung, sowie Formteile, die durch dieses Verfahren erhältlich sind.

### Hintergrund der Erfindung

Bisher verwendete nicht-poröse Formen, die mit makroskopischen Löchern versehen waren, durch welche die Luft abgesaugt wurde, haben den Nachteil, dass diese Löcher Spuren auf der Oberfläche des Formteils hinterlassen, die das Erscheinungsbild beeinträchtigen. Daher stellt die neuere Entwicklung auf dem Gebiet des Formenbaus Formen aus porösen Materialien zur Verfügung, die besonders zum Tiefziehen geeignet sind. Anfängliche Nachteile dieser neuen Technik bei der Übertragung feinstrukturierter oder glatter Oberflächen auf den zu formenden Gegenstand wurden ebenfalls bereits ausgeräumt.

WO-A-96/14194 beschreibt eine Vorrichtung bestehend aus einem gröber porösen Formstück, dessen Oberfläche da, wo sie von einem Fluid durchströmt werden soll, eine feiner poröse Oberflächenschicht trägt und auf den anderen Oberflächenbereichen Fluid-undurchlässige Abschlussmittel, die durch mindestens eine Kanalanschlussöffnung unterbrochen sind. Dabei sind mindestens das gröber poröse Formstück und die feiner poröse Oberflächenschicht als ein Kunststoffkörper ausgestaltet, durch den sich ein dreidimensionales Netz von Poren zieht, welche Poren sich verfeinernd aber kontinuierlich vom Formstück in die Oberflächenschicht und zu deren äußerer Oberfläche führen. Die Fluidundurchlässigen Abschlussmittel können als porenlose Abschlussschicht desselben Kunststoffkörpers ausgebildet sein oder es kann sich um einen separaten Teil handeln, der mit geeigneten Mitteln mit dem Kunststoffkörper verbunden ist. Als besonders geeigneter Werkstoff für die Herstellung der porösen Schichten wird ein Kunststoff auf Epoxidbasis beschrieben, in den Partikel aus Aluminium oder einer Aluminiumlegierung mit vorzugsweise unregelmäßiger Form eingelagert sind, so dass der Werkstoff eine in allen Richtungen durchgehende Porosität aufweist. Die Herstellung erfolgt durch Mischen, Formen und anschließendes Verdichten und gleichzeitiges Härten des Kunststoffs.

US 2003/0088008 A1 beschreibt eine Vorrichtung, die jedoch kugelförmige Partikel zur Herstellung der porösen Form nutzt. Zahlreiche Materialien können als Matrixpartikel und Bindemittel eingesetzt werden. Aufgrund der so entstehenden gleichmäßigeren Oberfläche der Form ist das Werkzeug insbesondere zum Übertragen glatter, fein- und feinststrukturierter Oberflächen auf den zu formenden Gegenstand geeignet. Das Werkzeug ist einstückig, d.h. die poröse Form ist mit den anderen Komponenten des Werkzeugs (z.B. Temperiervorrichtung) fest und untrennbar verbunden.

Dies ist ein noch bestehender Nachteil dieser Technik. Ein rascher und kostengünstiger Austausch der Formen bei Beschädigung oder fabrikationsbedingter Umrüstung ist praktisch nicht möglich. Vielmehr muss ein vollständiges Werkzeug hergestellt werden.

Dementsprechend ist es eine Aufgabe dieser Erfindung, ein Werkzeug zur Verfügung zu stellen, bei welchem die formgebende Schale zerstörungsfrei und unabhängig von den übrigen Komponenten des Werkzeugs ausgetauscht werden kann.

### Kurzbeschreibung der Erfindung

Ein erster Gegenstand der vorliegenden Erfindung betrifft eine Vorrichtung zum Thermoformen umfassend eine nicht gasdurchlässige Grundplatte, einen mit der Grundplatte gasdicht verbundenen, nicht gasdurchlässigen Rahmen, einen gasdurchlässigen Träger, der innerhalb des Rahmens angeordnet ist und mit ihm gasdicht verbunden ist, wobei die Grundplatte, der Rahmen und der Träger und oder der Einsatz ein Innenraumvolumen definieren und auf dem Träger außerhalb des Innenraumvolumens ein poröser Einsatz angeordnet ist und dem Innenraumvolumen über einen Gasein- und einen Gasauslass Gas entnommen oder zugeführt werden kann, wobei der poröse Einsatz mit dem Träger lösbar verbunden ist.

Ein zweiter Gegenstand der vorliegenden Erfindung ist die Verwendung der Vorrichtung zur Bearbeitung von Polymerkörpern durch Tiefziehen, Prägen oder Vakuumspannen.

Ein dritter Gegenstand der vorliegenden Erfindung ist ein Verfahren zum Thermoformen von thermoplastischen Kunststoffen unter Verwendung der Vorrichtung.

Ein vierter Gegenstand der vorliegenden Erfindung ist ein Formteil erhältlich durch das Verfahren.

Bevorzugte Ausführungsformen der Erfindung gehen aus den Unteransprüchen hervor.

### Beschreibung der Figuren

Figur 1 zeigt den schematischen Aufbau der Vorrichtung zum Thermoformen.

Figur 2 zeigt eine Detailansicht von Träger und porösem Einsatz.

### Detaillierte Beschreibung der Erfindung

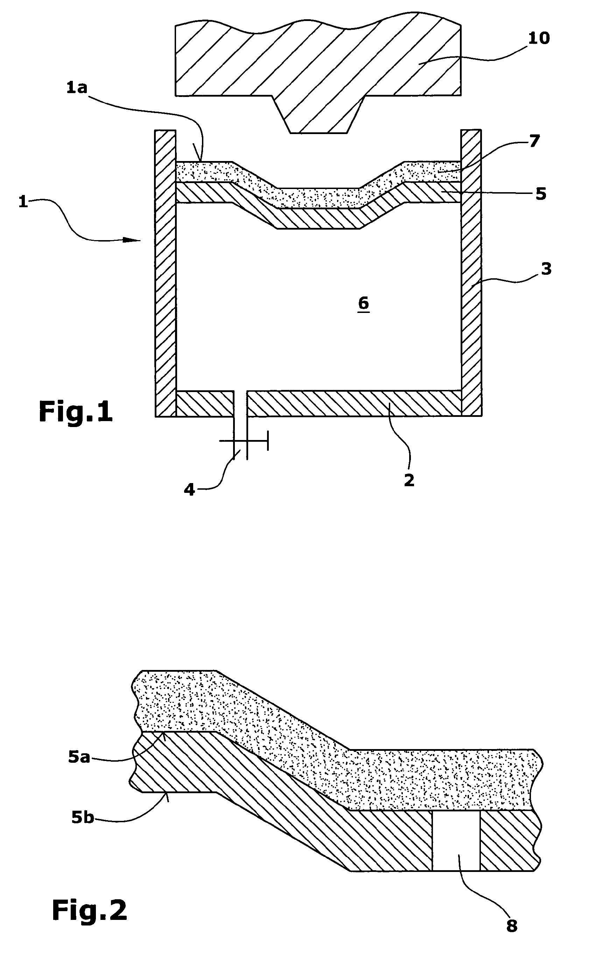

Die Erfindung betrifft eine Vorrichtung (1) zum Thermoformen umfassend eine nicht gasdurchlässige Grundplatte (2), einen mit der Grundplatte gasdicht verbundenen, nicht gasdurchlässigen Rahmen (3), einen gasdurchlässigen Träger (5), der innerhalb des Rahmens (3) angeordnet ist und mit ihm gasdicht verbunden ist, wobei die Grundplatte (2), der Rahmen (3) und der Träger (5) und/oder der Einsatz (7) ein Innenraumvolumen (6) definieren und auf dem Träger (5) außerhalb des Innenraumvolumens ein poröser Einsatz (7) angeordnet ist und dem Innenraumvolumen über einen Gasein- und einen Gasauslass (4) Gas entnommen oder zugeführt werden kann, wobei der poröse Einsatz (7) mit dem Träger (5) lösbar verbunden ist (s. Figur 1).

Unter "lösbar verbunden" ist im Zusammenhang mit der Erfindung zu verstehen, dass der poröse Einsatz (7) als solcher, also zerstörungsfrei aus der Vorrichtung (1)/dem Träger (5) entnommen werden kann, anschließend in die Vorrichtung (1)/dem Träger (5) wieder eingesetzt/eingefügt oder gegen einen anderen porösen Einsatz mit gleichen Dimensionen, gleichen und/oder unterschiedlichen Eigenschaften (unterschiedliche Struktur/Oberflächengestaltung) ausgetauscht werden kann.

Der Begriff "nicht gasdurchlässig" ist im Zusammenhang mit der Erfindung mit "gasundurchlässig" gleichbedeutend.

Im Zusammenhang mit der Erfindung wird die Seite der Vorrichtung und ihrer Bestandteile, die dem porösen Einsatz (7) bzw. der Werkstückseite zugewandt ist, im Folgenden auch als Formseite bezeichnet; die gegenüberliegende, dem porösen Einsatz (7) abgewandte Seite wird im Folgenden als Werkzeugseite bezeichnet. In Fachkreisen wird der als "Vorrichtung" bezeichnete Erfindungsgegenstand auch als "Werkzeug" bezeichnet.

Die Grundplatte (2) und/oder der Rahmen (3) weist einen verschließbaren Gasein- und Gasauslass (4) auf, um einen Druckausgleich zu erlauben, wenn an den porösen Einsatz (7) ein Über- oder Unterdruck angelegt wird.

Grundplatte (2), Rahmen (3) und Träger (5) sind so miteinander verbunden, dass ein Gasaustausch über den porösen Einsatz (7) nur durch den Träger (5) und den Gasein- und Gasauslass (4) möglich ist. Dabei können Grundplatte (2), Rahmen (3) und Träger (5) so angeordnet sein, dass sie einen Innenraum (6) begrenzen, dem über den Gasein- und Gasauslass (4) Gas entnommen oder zugeführt werden kann. Das Volumen dieses Innenraums ist jedoch vorzugsweise möglichst klein, um einen bestimmten Über- oder Unterdruck ohne die Bewegung großer Gasvolumina anlegen zu können.

In einer Ausführungsform der Erfindung können die Grundplatte (2), der Rahmen (3) und der Träger (5) auch so angeordnet sein, dass die dem Träger (5) zugewandte Oberfläche der Grundplatte (2) bündig an der der Grundplatte des Trägers (5) zugewandten Oberfläche anliegt, so dass ein Innenraumvolumen nicht vorhanden ist.

Hinsichtlich des Materials unterliegen Grundplatte (2) und Rahmen (3) keinen Beschränkungen, sofern das Material die notwendige Festigkeit und Gasundurchlässigkeit aufweist. Beispielsweise können Metalle wie Eisen, Aluminium und Kupfer, Metalllegierungen wie Stahl, Messing und Bronze, Holz, Glas, keramische Materialien, Gips und Kunststoffe oder Kombinationen dieser Materialien für die Grundplatte (2) und den Rahmen (3) verwendet werden. Kombinationen verschiedener Materialien in einem Bauteil oder Kombinationen von Bauteilen verschiedener Materialien sind möglich. Bei ausreichender Festigkeit, aber unzureichender Gasundurchlässigkeit kann auch eine gasundurchlässige Beschichtung, z.B. eine Lackierung usw., auf das Material aufgebracht werden.

Das Material des Trägers (5) unterliegt ebenfalls keinen Beschränkungen, sofern der Träger (5) die notwendige Festigkeit aufweist, so dass für den Träger (5) die gleichen oder ähnliche Materialien wie für die Grundplatte (2) und den Rahmen (3) gewählt werden können.

Der Träger (5) kann temperierbar ausgeführt sein, indem der Körper des Trägers (5) von Kanälen durchzogen ist, die mit einer Temperiervorrichtung verbunden sind. Über die Temperiervorrichtung, welche eine Pumpe aufweist, kann das Kanalsystem mit einem Temperiermedium (Flüssigkeit oder Gas) im Kreislauf gespeist werden. So kann dem Träger (5) und somit auch dem porösen Einsatz (7) Wärme zu- oder abgeführt werden.

Eine weitere Bedingung für den Träger (5) ist, dass er so strukturiert ist, dass Gas von der Werkzeugseite auf die Formseite und umgekehrt strömen kann. Um dies zu gewährleisten, kann der Träger Öffnungen (8) beliebiger Art und Form aufweisen (s. Fig. 2), über welche die Werkzeugseite des Trägers mit der Formseite des Trägers kommunizieren kann, insbesondere Bohrungen, Poren, Nuten, Spalten oder Kanäle. Beispielsweise kann der Träger (5) aus unregelmäßig geformten (spratzigen) Metallpartikeln oder gesintertem Metallgrieß hergestellt sein, so dass der Träger (5) eine poröse Struktur aufweist. Die Metallpartikel bzw. der Metallgries ist mit Hilfe eines oder mehrerer Harze verfestigt (stabilisiert).

Um einen möglichst optimalen und gleichmäßig verteilten Gasaustausch über die gesamte Oberfläche des Trägers (5) mit dem darüber angeordneten porösen Einsatz (7) zu ermöglichen, kann die Formseite (5a) des Trägers (5) eine zum Gasaustausch geeignete Struktur aufweisen, durch welche die Trägeroberfläche erhabene Bereiche aufweist. Dabei ist die Struktur so angeordnet, dass die im Träger (5) angeordneten Öffnungen (8) nicht in den erhabenen Bereichen des Trägers (5) liegen, also nicht unmittelbar an den oberhalb des Trägers (5) angeordneten porösen Einsatz (7) angrenzen. Wenn der poröse Einsatz (7) auf dem Träger (5) angeordnet ist, bilden zwei einander benachbarte erhabene Bereiche und die Werkzeugseite des porösen Einsatzes (7) Kanäle. Während die erhabenen Bereiche den porösen Einsatz (7) tragen, kann durch die Kanäle ein Gasaustausch und Druckausgleich über die Oberfläche der Formseite des Trägers (5) erfolgen. Die Form und Größe des Querschnitts der gebildeten Kanäle ist dabei nicht begrenzt, sofern einerseits ein Gasaustausch möglich ist und andererseits der poröse Einsatz (7) während des Thermoformens keinen zerstörenden Belastungen ausgesetzt wird.

Die an der Grenzfläche zwischen porösem Einsatz (7) und Träger (5) gebildete Struktur kann jede flächige Form aufweisen, beispielsweise spiralförmig, rechteckig oder ungeometrisch, solange ein Gasfluss mit möglichst geringem Druckverlust gewährleistet ist. Geeignete Konturen können in die dem porösen Einsatz (7) zugewandten Oberfläche des Trägers beispielsweise durch Fräsen, Gravieren, Formen eingebracht werden. Die Veröffentlichung WO-A-95/11744 zeigt eine spiralförmige Ausgestaltung eines Gasverteilungssystems.

Vorzugsweise ist die Form des Trägers (5) der Form des porösen Einsatzes (7) nachempfunden, so dass über die gesamte Oberfläche der Formseite des porösen Einsatzes (7) ein einheitlicher Abstand zwischen Formseite des porösen Einsatzes (7) und der Werkzeugseite (5b) des Trägers (5) besteht. Dies gewährleistet, dass der Druckverlust über die gesamte Fläche des Trägers (5) und des porösen Einsatzes (7) gleichmäßig ist.

Der poröse Einsatz (7) wird in der Fachwelt auch als Schale, Maske oder Form bezeichnet, ohne dass diese Begriffe jedoch andere Merkmale implizieren, als die im Zusammenhang mit dieser Erfindung genannten. Der poröse Einsatz (7) dient zur Formgebung des zu formenden Werkstücks durch Thermoformen und ist gemäß dieser Erfindung lösbar mit dem Träger (5) verbunden. In besonderen Ausgestaltungen kann der poröse Einsatz (7) dadurch vollflächig und passgenau mit dem Träger (5) in Kontakt gehalten werden, dass der Einsatz (7) durch Stifte, Schrauben, Saugnäpfe, Klammern oder Kombinationen davon in Position gehalten wird. Diese Befestigungsmittel können über den Rahmen (3) und/oder den Träger (5) mit dem Einsatz (7) verbunden sein.

Der poröse Einsatz (7) weist vorzugsweise eine einheitliche Stärke auf, so dass über die gesamte Oberfläche der Formseite des porösen Einsatzes (7) ein einheitlicher Abstand zwischen Formseite (5a) und Werkzeugseite (5b) des porösen Einsatzes (7) besteht. Die Stärke des porösen Einsatzes ist im Wesentlichen von der Art und Größe des Werkzeuges abhängig und kann 5 bis 100 mm, bevorzugt 10 bis 50 mm, mehr bevorzugt 15 bis 25 mm, am meisten bevorzugt 25 mm betragen. Typischerweise kann die Stärke des porösen Einsatzes (7), wie auch die des Trägers (5), über die gesamte Fläche hinweg einheitlich sein, um einen gleichmäßigen Gasaustausch zu gewährleisten.

Der poröse Einsatz (7) umfasst feine Matrixpartikel und ein Bindemittel. Dabei kann der poröse Einsatz sowohl nur eine Schicht Matrixpartikel und Bindemittel umfassen als auch zwei oder mehr Schichten. Bei mehrschichtigem Aufbau unterscheiden sich die Schichten beispielsweise durch Dicke, Porosität, das Verhältnis Matrixpartikel zu Bindemittel, Form der Matrixpartikel, Größe der Matrixpartikel. Die Matrixpartikel können eine beliebige regelmäßige oder unregelmäßige Form aufweisen, solange sie sich mit dem Binder zu einem porösen Material formen lassen. Als Beispiele seien Kugeln, Ellipsoide, regelmäßige und unregelmäßige Polyeder oder Mischformen genannt, wobei die Kugelform bevorzugt ist.

Die Matrixpartikel können aus einer Vielzahl von Materialien bestehen, beispielsweise aus einem Material welches ausgewählt ist aus der Gruppe bestehend aus Aluminium, Kupfer, Eisen, Stahl, Titan, Platin, Mangan, Zink, Bronze, Aluminiumlegierungen oder anderen Metallen oder Metalllegierungen, Kohlenstoff, Glas, keramischem Material, Quarz, Silica, Siliziumcarbid, Wolframcarbid, Borcarbid, Metakaolin, gebranntem Ton, Porzellanerde, Calciumcarbonat, Bariumsulfat, Aluminiumoxid, Magnesiumoxid oder Mischungen oder Verbindungen dieser Materialien.

Die im Rahmen dieser Erfindung verwendeten Matrixpartikel haben eine mittlere Partikelgröße innerhalb bestimmter Grenzen. Die mittlere Partikelgröße bedeutet hier den log-Normalverteilungs D₅₀ Median. Dieser D₅₀ Median wird durch das Siebanalyse-Verfahren nach ASTM-Standard B214-92 ("Standard Test Method for Sieve Analysis of Granular Metal Powders") und das in ASTM D1366-86 beschriebene Berichtsverfahren ("Standard Practice for Reporting Particle Size Characteristics of Pigments", reproved 1991) der American Society for Testing and Materials bestimmt. Der hier verwendete D₅₀ Median wird bestimmt, indem der kumulative Gewichtsprozentwert gegen die Daten zur Klassengrößenobergrenze wie in ASTM D1366-86 dargestellt aufgetragen werden und anschließend der Durchmesser, d.h. der D₅₀ Median, bestimmt wird, der dem 50% kumulativen Gewichtswert entspricht.

Die verwendeten Matrixpartikel weisen eine mittlere Partikelgröße von 5 bis 200 µm, bevorzugt 5 bis 100 µm, mehr bevorzugt 5 bis 80 µm, noch mehr bevorzugt 5 bis 50 µm, am meisten bevorzugt 25 bis 40 µm auf. Dabei sollte die Schwankungsbreite der Partikelgröße klein sein, so dass wenigstens 80 Gew.-%, bevorzugt wenigstens 85 Gew.-%, am meisten bevorzugt wenigstens 98 Gew.-% der Matrixpartikel eine durchschnittliche Partikelgröße haben, die nicht mehr als 20 %, bevorzugt nicht mehr als 15 %, am meisten bevorzugt nicht mehr als 10 % von der durchschnittlichen Partikelgröße abweicht.

Das Bindemittel ist ein organisches oder anorganisches Polymer mit einer Formbeständigkeit in der Wärme bis zu einer Temperatur von wenigstens 100°C, bevorzugt wenigstens 150 °C, am meisten bevorzugt wenigstens 175 °C. Die organischen Bindemittel können aus der Gruppe bestehend aus thermoplastischen Polymeren und gehärteten Polymeren ausgewählt sein. Insbesondere können die Bindemittel sein:
a) feste teilchenförmige thermoplastische Polymere, die mit den Matrixpartikeln gemischt und anschließend bei einer Temperatur über dem Schmelzpunkt des Polymers gesintert werden,
b) flüssige Polymerharze, die mit den Matrixpartikeln gemischt und anschließend durch Wärme oder chemisch gehärtet werden,
c) wässrige Natrium- und/oder Kalium-Wasserglaslösungen, die mit den Matrixpartikeln gemischt und anschließend durch Verdunstung des Wassers, beispielsweise unter erhöhtem Druck und erhöhter Temperatur, gehärtet werden.

Beispielsweise kann das Bindemittel ausgewählt sein aus der Gruppe bestehend aus Polyetheretherketonen (PEEK), Polyvinylchlorid (PVC), Polypropylen (PP), Polyethylen (PE), Acrylnitril-Butadien-Styrol-Copolymer (ABS), Polycarbonat (PC), Polymethylmethacrylat (PMMA), Polyvinylidenfluorid (PVDF), thermoplastischen Polyolefinen (TPO), Epoxidharz, Polyurethanharz (PU), Alkydharz, ungesättigtes Polyesterharz (UP), Melaminharz, Polyacrylatharz, Vinylesterharz, Phenolharz, wässrigen Alkalisilikaten (Natriumwasserglas, Kaliumwasserglas und deren Mischungen).

Sintern bedeutet im Zusammenhang mit der vorliegenden Erfindung eine kontrollierte Druck- und Wärmebehandlung, durch die die Matrixpartikel mit einer dünnen Schicht des geschmolzenen Bindemittels bedeckt werden, so dass die Partikel miteinander verbunden werden und die endgültige Form des so gebildeten Formteils behalten.

Allgemein ist dem Fachmann das Herstellungsverfahren sowie die möglichen Beschaffenheiten und Eigenschaften der Matrixpartikel und des Bindemittels bekannt, z.B. aus US 2003/0088008 A1.

In einer besonderen Ausführungsform kann auf der Formseite (1a) der Vorrichtung (1) ein Werkzeug (10) zum Hinterspritzen angeordnet sein.

Ein weiterer Gegenstand der Erfindung ist die Verwendung der Vorrichtung (1) zur Bearbeitung von Formkörpern eines thermoplastischen (wärmeverformbaren) Polymers durch Tiefziehen, Prägen oder Vakuumspannen. Der Fachmann versteht unter dem Begriff Polymerkörper alle Kunststoffprodukte und -halbzeuge, die sich für mindestens eine der vorgenannten Bearbeitungsformen eignen, insbesondere Kunststofffolien, Kunststofffilme, Kunststofftafeln, in ein- oder mehrschichtiger Ausführung. Thermoplaste sind dem Fachmann als Polymere bekannt, die bei Gebrauchstemperatur weich oder hart sind und oberhalb der Gebrauchtemperatur einen Fließübergangsbereich besitzen.

Die Vorrichtung (1) kann ebenfalls in anderen technischen Gebieten verwendet werden, in denen die Eigenschaften der Vorrichtung (1) vorteilhaft sind. Beispielhaft genannt seien hier Anwendungen in der Keramikindustrie (z.B. das Pressen von Tonerde), in der Papier- und Kartonherstellung (z.B. das Entwässern von Zellstoffen) und in der Filtertechnik sowie in der Luftfilmlagerungstechnik (z.B. als Bauelement für aerostatische Lager).

Ein weiterer Gegenstand der vorliegenden Erfindung ist ein Verfahren zum Thermoformen von thermoplastischen Kunststoffen unter Verwendung der Vorrichtung (1). Das Verfahren umfasst die folgenden Schritte
i) Bereitstellen der Vorrichtung (1), ggf. mit einem Werkzeug (10) zum Hinterspritzen auf der Formseite der Vorrichtung,
ii) Bereitstellen eines thermoplastischen Kunststoffkörpers,
iii) Erwärmen des thermoplastischen Kunststoffkörpers auf eine Temperatur innerhalb des Fließübergangsbereichs,
iv) Auflegen des thermoplastischen Kunststoffkörpers auf die Formseite des porösen Einsatz (7), so dass der thermoplastische Kunststoffkörper luftdicht oder nahezu luftdicht mit der Oberfläche des porösen Einsatzes (7) abschließt,
v) Anformen des thermoplastischen Kunststoffkörpers an den porösen Einsatz (7),
vi) ggf. hinterspritzen des angeformten thermoplastischen Kunststoffkörpers,
vii) Abkühlen des thermoplastischen Kunststoffkörpers auf eine Temperatur unterhalb des Fließübergangsbereichs und
viii) Entnehmen des thermoplastischen Kunststoffkörpers,

Das Anformen des thermoplastischen Kunststoffkörpers an den porösen Einsatz (7) kann erfolgen, indem auf der Werkzeugseite der Vorrichtung ein Überdruck angelegt wird, so dass der thermoplastische Kunststoffkörper an den porösen Einsatz (7) angepresst wird. Alternativ kann die Formseite des porösen Einsatz (7) ein Unterdruck angelegt werden, so dass der thermoplastische Kunststoffkörper an den porösen Einsatz (7) angesaugt und so in der Vorrichtung fixiert wird.

Das Hinterspritzen des thermoplastischen Kunststoffkörpers ist optional und kann mit demselben oder einem anderen Kunststoff erfolgen, aus dem der thermoplastische Kunststoffkörper besteht, sofern die unterschiedlichen Kunststoffe miteinander kompatibel sind. Auf diese Weise kann ein Formteil nahezu beliebiger Schichtdicke hergestellt werden. Es ist dem Fachmann klar, dass zum Hinterspritzen sowohl thermoplastische Kunststoffe als auch Reaktionsharzsysteme verwendet werden können. Unter Reaktionsharzsystemen werden aus zwei oder mehr Komponenten bestehende Systeme verstanden, die beim Zusammenbringen der Komponenten unter Ablauf einer oder mehrerer chemischer Reaktionen ein polymeres Produkt ergeben. Nach seinen Eigenschaften kann dieses Produkt als Thermoplast, Duroplast oder Elastomer charakterisiert werden. Insbesondere kann der zum Hinterspritzen verwendete Kunststoff oder das Reaktionsharzsystem auch Schäumungsmittel oder andere Zusatz- und Hilfsstoffe enthalten kann.

Ein nach diesem Verfahren erhaltenes Formteil ist ebenfalls Gegenstand der vorliegenden Erfindung. Insbesondere bezieht sich die Erfindung auf Formteile, die eine strukturierte Oberfläche besitzen. Die Struktur der Oberfläche umfasst feinste reliefartige Strukturen, insbesondere Strukturen, die der Oberfläche natürlicher Materialien oder veredelter Naturmaterialien nachempfunden sind, beispielsweise glattes Leder, Veloursleder, Nappaleder, genarbtes Leder, Holz, oder technische Strukturen, Schriftzüge usw. Typische Formteile sind ausgewählt aus der Gruppe umfassend Armaturenbretter und Fahrzeuginnenverkleidungen.

## Patentansprüche

1. Vorrichtung (1) zum Thermoformen umfassend eine nicht gasdurchlässige Grundplatte (2), einen mit der Grundplatte gasdicht verbundenen, nicht gasdurchlässigen Rahmen (3), einen gasdurchlässigen Träger (5), der innerhalb des Rahmens (3) angeordnet ist und mit ihm gasdicht verbunden ist, wobei die Grundplatte (2), der Rahmen (3) und der Träger (5) und/oder der Einsatz (7) ein Innenraumvolumen (6) definieren und auf dem Träger (5) außerhalb des Innenraumvolumens ein poröser Einsatz (7) angeordnet ist und dem Innenraumvolumen über einen Gasein- und einen Gasauslass (4) Gas entnommen oder zugeführt werden kann, **dadurch gekennzeichnet, dass** der poröse Einsatz (7) mit dem Träger (5) lösbar verbunden ist.

2. Vorrichtung nach Anspruch 1, wobei der Träger (5) so strukturiert ist, dass Gas von der Werkzeugseite (dem Innenraumvolumen) (5b) zur Formseite (5a) oder in umgekehrter Richtung strömen kann.

3. Vorrichtung nach Anspruch 1, wobei der Träger von der Werkzeugseite (5b) bis zur Formseite (5a) reichende Öffnungen (8) und die Formseite (5a) eine Struktur aufweist, die mit den Öffnungen (8) in Verbindung steht und zum Druckausgleich durch Gasaustausch geeignet ist.

4. Vorrichtung nach irgendeinem der Ansprüche 1 bis 3, wobei der poröse Einsatz (5) eine einheitliche Stärke von 5 bis 100 mm, bevorzugt 10 bis 50 mm, mehr bevorzugt 15 bis 25 mm, am meisten bevorzugt 25 mm aufweist.

5. Vorrichtung nach irgendeinem der Ansprüche 1 bis 4, ferner umfassend ein auf der Formseite (1a) der Vorrichtung (1) angeordnetes Werkzeug (10) zum Hinterspritzen.

6. Vorrichtung nach irgendeinem der Ansprüche 1 bis 5, wobei der poröse Einsatz (7) feine Matrixpartikeln (Pulver, Granulat, Mikrokugeln, Metallgranulat) und ein Bindemittel umfasst.

7. Vorrichtung nach Anspruch 6, wobei die Matrixpartikel aus wenigstens einem Material bestehen, welches ausgewählt ist aus der Gruppe bestehend aus Aluminium, Kupfer, Eisen, Stahl, Titan, Platin, Mangan, Zink, Bronze, Aluminiumlegierungen oder anderen Metallen oder Metalllegierungen, Kohlenstoff, Glass, keramischem Material, Quarz, Silica, Siliziumcarbid, Wolframcarbid, Borcarbid, Metakaolin, gebranntem Ton, Porzellanerde, Calciumcarbonat, Bariumsulfat, Aluminiumoxid, Magnesiumoxid oder Mischungen oder Verbindungen dieser Materialien.

8. Vorrichtung nach Anspruch 6 oder 7, wobei die Matrixpartikel eine unregelmäßige oder kugelförmige Form besitzen.

9. Vorrichtung nach Anspruch 8, wobei die Matrixpartikel einen Durchmesser von 5 bis 200 µm, bevorzugt 5 bis 100 µm, mehr bevorzugt 5 bis 80 µm, noch mehr bevorzugt 5 bis 50 µm, am meisten bevorzugt 25 bis 40 µm haben.

10. Vorrichtung nach Anspruch 9, wobei wenigstens 80 Gew.-%, bevorzugt wenigstens 85 Gew.-%, am meisten bevorzugt wenigstens 98 Gew.-% der Matrixpartikel eine durchschnittliche Partikelgröße haben, die nicht mehr als 20 %, bevorzugt nicht mehr als 15 %, am meisten bevorzugt nicht mehr als 10 % von der durchschnittlichen Partikelgröße abweicht.

11. Vorrichtung nach irgendeinem der Ansprüche 6 bis 10, wobei das Bindemittel ausgewählt ist aus der Gruppe bestehend aus Polyetheretherketonen (PEEK), Polyvinylchlorid (PVC), Polypropylen (PP), Polyethylen (PE), Acrylnitril-Butadien-Styrol-Copolymer (ABS), Polycarbonat (PC), Polymethylmethacrylat (PMMA), Polyvinylidenfluorid (PVDF), thermoplastischen Polyolefinen (TPO), Epoxidharz, Polyurethanharz (PU), Alkydharz, ungesättigtes Polyesterharz (UP), Melaminharz, Polyacrylatharz, Vinylesterharz, Phenolharz, wässrigen Alkalisilikaten (Natriumwasserglas, Kaliumwasserglas und deren Mischungen).

12. Verwendung der Vorrichtung (1) nach irgendeinem der Ansprüche 1 bis 11 zur Bearbeitung von Polymerkörpern durch Tiefziehen, Prägen oder Vakuumspannen.

13. Verfahren zum Thermoformen von thermoplastischen Kunststoffen unter Verwendung der Vorrichtung nach irgendeinem der Ansprüche 1 bis 12.

14. Verfahren nach Anspruch 13, wobei zur Formgebung des thermoplastischen Kunststoffs an die Formseite (1a) der Vorrichtung ein Überdruck angelegt wird.

15. Verfahren nach Anspruch 13, wobei zur Formgebung des thermoplastischen Kunststoffs an die Werkzeugseite (5b) ein Unterdruck angelegt wird.

16. Formteil erhältlich durch das Verfahren nach irgendeinem der Ansprüche 13 bis 16.

17. Formteil nach Anspruch 13, wobei das Formteil eine glatte oder strukturierte (genarbte oder technische) Oberfläche besitzt.
